# EUROPÄISCHE PATENTSCHRIFT

(11) **EP 3 383 026 B1**
(45) Veröffentlichungstag und Bekanntmachung des Hinweises auf die Patenterteilung: **19.06.2019**
(21) Anmeldenummer: 18161192.2
(22) Anmeldetag: 12.03.2018
(51) Int. Cl.: H04N 5/349, H04N 5/369, H04N 5/225

(54) **KAMERA UND VERFAHREN ZUR ERFASSUNG VON RELATIV ZU DER KAMERA IN EINER FÖRDERRICHTUNG BEWEGTEN OBJEKTEN**
CAMERA AND METHOD FOR DETECTING OBJECTS MOVING RELATIVE TO THE CAMERA INTO A DIRECTION OF TRANSPORT
CAMÉRA ET PROCÉDÉ DE DÉTECTION D'OBJETS SE DÉPLAÇANT VERS LA CAMÉRA DANS UN DISPOSITIF DE TRANSPORT

(30) Priorität: 30.03.2017 DE 102017106831
(43) Veröffentlichungstag der Anmeldung: 03.10.2018
(73) Patentinhaber: Sick AG, 79183 Waldkirch (DE)
(72) Erfinder: Nopper, Richard, 79261 Gutach (DE); Strohmeier, Dirk, 79104 Freiburg (DE)

(56) Entgegenhaltungen:
- WO-A2-99/31870
- US-A1- 2011 013 156

## Beschreibung

Die Erfindung betrifft eine Kamera und ein Verfahren zur Erfassung von relativ zu der Kamera in einer Förderrichtung bewegten Objekten nach dem Oberbegriff von Anspruch 1 beziehungsweise 13.

In industriellen Anwendungen werden Kameras in vielfältiger Weise eingesetzt, um Objekteigenschaften automatisch zu erfassen, beispielsweise zur Inspektion oder Vermessung von Objekten. Dabei werden Bilder des Objekts aufgenommen und entsprechend der Aufgabe durch Bildverarbeitungsverfahren ausgewertet. Eine weitere Anwendung von Kameras ist das Lesen von Codes. Mit Hilfe eines Bildsensors werden Objekte mit den darauf befindlichen Codes aufgenommen, in den Bildern die Codebereiche identifiziert und dann dekodiert. Kamerabasierte Codeleser kommen problemlos auch mit anderen Codearten als eindimensionalen Strichcodes zurecht, die wie ein Matrixcode auch zweidimensional aufgebaut sind und mehr Informationen zur Verfügung stellen. Auch die automatische Texterfassung von gedruckten Adressen (OCR, Optical Character Recognition) oder Handschriften ist im Prinzip ein Lesen von Codes. Typische Anwendungsgebiete von Codelesern sind Supermarktkassen, die automatische Paketidentifikation, Sortierung von Postsendungen, die Gepäckabfertigung in Flughäfen und andere Logistikanwendungen.

Eine häufige Erfassungssituation ist die Montage der Kamera über einem Förderband. Die Kamera nimmt während der Relativbewegung des Objektstroms auf dem Förderband Bilder auf und leitet in Abhängigkeit der gewonnenen Objekteigenschaften weitere Bearbeitungsschritte ein. Solche Bearbeitungsschritte bestehen beispielsweise in der an das konkrete Objekt angepassten Weiterverarbeitung an einer Maschine, die auf geförderte Objekte einwirkt, oder in einer Veränderung des Objektstroms, indem bestimmte Objekte im Rahmen einer Qualitätskontrolle aus dem Objektstrom ausgeschleust werden oder der Objektstrom in mehrere Teilobjektströme sortiert wird. Wenn die Kamera ein kamerabasierter Codeleser ist, werden die Objekte für eine korrekte Sortierung oder ähnliche Bearbeitungsschritte anhand der angebrachten Codes identifiziert.

Die Situation einer Relativbewegung des Objekts zu der Kamera in einem Objektstrom kann dafür genutzt werden, Bilder sukzessive zeilenweise aufzunehmen und die Bildzeilen anschließend zu einem Bild zusammenzusetzen. Es genügt dann eine Zeilenkamera, um die Objekte in hoher Bildqualität unter Ausleuchtung mit hoher Intensität zu erfassen. Die Auflösung dieser Bilder wird in Zeilenrichtung quer zur Bewegung des Objektstroms durch die Auflösung des Zeilensensors und in Förderrichtung durch die Bildaufnahmefrequenz bestimmt. Um eine höhere Bildauflösung zu erzielen, kann also ein Zeilensensor mit einer größeren Anzahl beziehungsweise Dichte von Pixeln verwendet werden. Das erhöht aber die Herstellkosten. Eine Erhöhung der Bildaufnahmefrequenz andererseits reduziert die Integrationszeit und ist deshalb nicht unbegrenzt möglich.

Es ist bekannt, die effektive Bildauflösung bei gleicher physischer Pixelauflösung dadurch zu verfeinern, dass mehrere Bilder mit leichtem Versatz gegeneinander aufgenommen und anschließend miteinander verrechnet werden (super sampling, super resolution). Die Voraussetzung dafür sind entsprechend zueinander versetzte Ausgangsbilder. Dazu kann der Bildsensor durch eine Mimik in eine rasche Bewegung versetzt werden. Allerdings ist eine solche Mimik empfindlich und schwer zu synchronisieren.

Die US 6 166 831 A sieht deshalb einen Bildsensor mit zwei Bildzeilen vor, deren Pixel leicht in Zeilenrichtung gegeneinander versetzt angeordnet sind. Das löst prinzipiell das Problem der Erfassung geeigneter Ausgangsbilder. Dafür ist jedoch ein speziell angepasster Bildsensor erforderlich. Außerdem wird die Bildauflösung in der Richtung quer zu den Bildzeilen nicht verbessert.

Die US 2011/0115793 A1 befasst sich mit Bildverarbeitung zur Auflösungserhöhung mit TDI (Super-Resolution Time Delay and Integrate). Dabei wird dafür gesorgt, dass sich die Kamera zwischen zwei Aufnahmen in Längs- wie Querrichtung bewegt, um jeweils gezielt das Pixelraster zu verlassen. Wie oben schon erwähnt, sind derartige Bewegungen nur sehr schwer zu synchronisieren und nicht robust.

Die US 2009/0284666 A1 befasst sich mit einem Zeilenprojektor nach dem Scanprinzip. Dabei sind zwei Pixelzeilen mit Versatz um jeweils ein halbes Pixel in horizontaler wie vertikaler Richtung vorgesehen, die in ihrer Überlagerung ein Bild entsprechend erhöhter Auflösung projizieren. Erneut erfordert dies spezielle Hardwarekomponenten, die im Übrigen zwar von ihrem Prinzip, nicht aber tatsächlich auf eine Zeilenkamera übertragbar sind, da sie Bilder projizieren und nicht aufnehmen.

Aus der US 9 501 683 B1 ist ein Barcodeleser mit erhöhter Auflösung bekannt. Dabei wird vorgeschlagen, einen jeweiligen Codeabschnitt doppelt, jedoch mit nichtganzzahligem relativem Pixelversatz aufzunehmen und die beiden Abschnitte dann zu einem Bild höherer Auflösung zu verrechnen. Es werden mehrere Maßnahmen genannt, um den Pixelversatz zu erzielen. Dazu zählen ein physischer Pixelversatz auf dem Bildsensor und eine erhöhte Bildaufnahmefrequenz, mit den schon zuvor genannten Nachteilen, nur spezielle Halbleiterkomponenten verwenden zu können beziehungsweise zwangsläufig verkürzter Integrationszeiten. In einer weiteren Ausführungsform wird die Kamera relativ zum Objektstrom verdreht oder verkippt.

Die EP 3 012 778 A2 offenbart eine Kamera mit Doppelzeilenempfänger. Die beiden Bildzeilen werden jedoch nicht zur Auflösungserhöhung genutzt, sondern um Farbaufnahmen zu gewinnen. Dazu wird der Objektstrom stroboskopisch mit jeweils einem anderen Spektralband beleuchtet, und die beiden Zeilen synchronisieren ihre Aufnahmezeitfenster entsprechend der aufzunehmenden Teilfarbe.

In der US 6 429 953 B1 geht es sowohl um Auflösungserhöhung als auch Farberfassung. Pixel mit entsprechenden Farbfiltern werden gegeneinander versetzt, um die verschiedenen erforderlichen Ausgangsbilder zu erfassen. Ein weiteres Mal sind dafür spezielle Halbleiterkomponenten erforderlich.

Die US2011/0013156 A1 offenbart eine Vorrichtung zum Erzeugen von Hologrammen, die zwei übereinander liegende Zeilenanordnungen von LEDs und den LEDs vorgeordnete holographische optische Elemente aufweist.

Es ist daher Aufgabe der Erfindung, eine erhöhte Bildauflösung einer gattungsgemäßen Kamera auf einfache Weise zu erzielen.

Diese Aufgabe wird durch eine Kamera und ein Verfahren zur Erfassung von relativ zu der Kamera in einer Förderrichtung bewegten Objekten nach Anspruch 1 beziehungsweise 13 gelöst. Die Kamera weist einen Lichtempfänger oder Bildsensor mit zumindest zwei Zeilen von Lichtempfangselementen oder Lichtempfangspixeln auf. Damit werden zwei zueinander zumindest in Zeilenrichtung zueinander versetzte Aufnahmen erzeugt, um daraus eine Bildzeile höherer Auflösung zu berechnen. Das bedeutet, dass die erreichte Auflösung besser ist als die ursprüngliche Auflösung entsprechend der Pixelgröße beziehungsweise Pixeldichte der Zeilen von Lichtempfangspixeln. Aus solchen Bildzeilen verbesserter Auflösung wird dann sukzessive im Verlauf einer Relativbewegung von Kamera und Objekten in einer Förderrichtung ein Gesamtbild erzeugt. Die Förderrichtung liegt quer zu der Zeilenrichtung, insbesondere senkrecht, wobei aber ein gewisser abweichender Winkel zulässig ist. Durch zusätzlichen Versatz der Aufnahmen in Förderrichtung oder andere Maßnahmen kann auch in dieser Richtung die Bildauflösung verbessert werden. Weiterhin können mehr als zwei Zeilen von Lichtempfangspixeln verwendet werden, um die Auflösung beziehungsweise andere Parameter wie die Bildhelligkeit oder die Farberfassung weiter zu verbessern.

Die Erfindung geht nun von dem Grundgedanken aus, den Versatz der Aufnahmen durch die Lichtwege zu erreichen. Dafür wird dem Lichtempfänger eine Empfangsoptik vorgeordnet, die für den Versatz zwischen den Aufnahmen sorgt. Diese Empfangsoptik ist vorzugsweise statisch, d.h. unbeweglich gegenüber dem Lichtempfänger beziehungsweise der Kamera. Dies kann mit weiteren Maßnahmen kombiniert werden, um insgesamt den gewünschten Versatz zu erreichen.

Die Erfindung hat den Vorteil, dass eine erhöhte Bildauflösung unter Vermeidung aller einleitend genannten Problematiken erreicht wird. Sie ermöglicht die Verwendung eines Standardbildsensors mit regelmäßig angeordneten Lichtempfangspixeln, beispielsweise eines Doppel- oder Mehrzeilenempfängers oder eines Matrixempfängers, von dem nur bestimmte Zeilen genutzt werden. Der Flächenbedarf dieses Bildsensors erhöht sich nicht, die ursprüngliche Bildauflösung und damit Pixelanordnung (Pitch) bleibt unberührt. In der Kamera sind dennoch für den Versatz keinerlei bewegliche Teile erforderlich, so dass eine Synchronisation zur Förderbewegung nicht schwieriger ist als bei einer herkömmlichen einfachen Zeilenkamera ohne jede Auflösungserhöhung.

Die Lichtempfangspixel sind bevorzugt in einem Pixelabstand zueinander angeordnet, wobei der Versatz der Aufnahmen einem Bruchteil des Pixelabstands entspricht. Der Pixelabstand (pixel pitch) bestimmt die ursprüngliche Auflösung des Lichtempfängers. Dabei ist auch denkbar, dass Lichtempfangspixel in verschiedenen Zeilen einen unterschiedlichen Pixelabstand aufweisen, demnach verschiedene ursprüngliche Auflösungen aufweisen. Die höhere Auflösung nach dem Verrechnen der Aufnahmen ist dann besser als die feinere ursprüngliche Auflösung. Der Versatz der beiden Aufnahmen entsprechend einem Bruchteil des Pixelabstands bricht das Pixelraster vorteilhaft auf. Dabei ist auch ein unechter Bruch >1 nicht ausgeschlossen, wobei dann aber der ganzzahlige Anteil gerade nicht dazu führt, das Pixelraster zu verlassen.

Die Auswertungseinheit ist bevorzugt dafür ausgebildet, die erste Aufnahme und die zweite Aufnahme mit einem Versatz auch quer zu der Zeilenrichtung zu erzeugen und ein Gesamtbild mit höherer Auflösung als die ursprüngliche Auflösung auch in Förderrichtung zu erzeugen. In den meisten Anwendungen ist die Orientierung der Objekte zu der Kamera beliebig. Daher ist es vorteilhaft, wenn sich die Bildauflösung in beiden Dimensionen und nicht nur in Zeilenrichtung verbessert.

Die Empfangsoptik sorgt bevorzugt auch für den Versatz in Förderrichtung. Damit wird auch diese Auflösungsverbesserung durch eine einfache Maßnahme wie diejenige für die Zeilenrichtung mit den schon oben genannten Vorteilen erreicht.

Die Auswertungseinheit ist bevorzugt dafür ausgebildet, die erste Aufnahme und die zweite Aufnahme mit gestaffelten Belichtungszeitfenstern zu erzeugen. Dies ist eine Alternative oder Ergänzung zu einem Versatz in Förderrichtung durch die Empfangsoptik und dient folglich ebenfalls dazu, die Auflösung auch in Förderrichtung zu verbessern. Beispielsweise greifen die Belichtungszeitfenster für die beiden Aufnahmen wie Zähne ineinander. Der zeitliche Versatz durch die gestaffelten Belichtungszeitfenster überträgt sich durch die Relativbewegung auf den gewünschten räumlichen Versatz der Aufnahmen in Förderrichtung. Vorzugsweise entspricht dieser Versatz gerade dem Bruchteil des Pixelabstands, um den die Aufnahmen in Zeilenrichtung versetzt sind. Prinzipiell könnte in Förderrichtung die Auflösung auch durch eine erhöhte Bildaufnahmefrequenz erreicht werden. Das reduziert aber die Integrationszeit und ist daher nachteilig. Gestaffelte Belichtungszeitfenster erreichen denselben Effekt bezüglich der Bildauflösung ohne Auswirkungen, obwohl die Integrationszeit erhalten bleiben kann.

Die Empfangsoptik weist bevorzugt eine Vielzahl von in Zeilenrichtung verkippten und/oder gegenüber einem Raster der Lichtempfangspixel versetzten Mikrolinsen auf. Beide Maßnahmen der Verkippung und des Versatzes bewirken eine Verschiebung der Aufnahme zum physischen Pixelraster und können alternativ verwendet werden oder einander ergänzen. Mikrolinsen lassen sich vergleichsweise einfach vor einem Bildsensor anordnen, auch als nachträglicher Produktionsschritt auf einem Standardbauteil, und sie sind in ihren optischen Eigenschaften weitgehend frei durch das Werkzeug festlegbar. Da ein relativer Versatz gewünscht ist, genügen im Prinzip Mikrolinsen nur vor einer der beiden Zeilen. In anderen Ausführungsformen werden Mikrolinsen für jede Zeile mit eigenen Eigenschaften genutzt. Die Verkippung einer Mikrolinse kann durch Kombination mit einem Keil oder Prisma erfolgen, sei es in jeweils einem einstückigen optischen Kombinationselement oder indem den Mikrolinsen ein Array von Keil- oder Prismenstrukturen zugeordnet wird.

Die Empfangsoptik weist bevorzugt eine Vielzahl von in Förderrichtung verkippten und/oder gegenüber einem Raster der Lichtempfangspixel versetzten Mikrolinsen auf. Damit wird eine Auflösungserhöhung in Förderrichtung erreicht. Ansonsten gelten sinngemäß die Ausführungen für einen Versatz in Zeilenrichtung auch hier. Es ist denkbar und besonders vorteilhaft, Mikrolinsen sowohl in Zeilen- als auch in Förderrichtung zu verkippen und/oder gegenüber dem Pixelraster zu versetzen, um die Vorteile einer Auflösungserhöhung in beiden Dimensionen zu erhalten.

Vorzugsweise sind Mikrolinsen für die eine Zeile in Gegenrichtung der Mikrolinsen für die andere Zeile verkippt oder versetzt. Dadurch kann der einzelne Versatz je Lichtempfangspixel vergleichsweise klein bleiben, was manchmal optisch leichter und mit weniger Verzerrungen zu realisieren ist. Beispielsweise bewirken die Mikrolinsen jeder einen Zeile die Hälfte des gewünschten Versatzes in Zeilen- und/oder Förderrichtung, woraus dann in Gesamtbetrachtung beider Zeilen der gewünschte Gesamtversatz resultiert.

Die Empfangsoptik weist bevorzugt ein diffraktives optisches Element (DOE) auf. Mit einem DOE ist eine gewünschte Lichtumverteilung auf kleinen räumlichen Skalen möglich, und wenn ein DOE einmal berechnet und das notwendige Werkzeug erstellt ist, lässt es sich sehr einfach mit einem Bildsensor kombinieren. Insbesondere sind durch Diffraktion ähnliche Effekte und Vorteile erreichbar, wie sie zu Mikrolinsen ausgeführt wurden.

Die Empfangsoptik weist bevorzugt mindestens eine Freiformfläche auf. Dabei kann es sich einerseits um Mikrooptiken mit Freiform handeln. Das lässt dann gegenüber Mikrolinsen mehr Designfreiheitsgrade. Es ist aber auch denkbar, eine makroskopische Empfangsoptik mit Freiformfläche zu entwerfen, die für alle Lichtempfangspixel oder zumindest größere Bereiche des Lichtempfängers den gewünschten Versatz schafft. Insbesondere kann eine solche Freiform mit einem Empfangsobjektiv zur Fokussierung kombiniert werden.

Die Empfangsoptik weist bevorzugt mindestens eine gekippte oder keilförmige Fläche auf. Erneut sind hier eine Variante mit Mikrooptiken und eine makroskopische Empfangsoptik denkbar. Im erstgenannten Fall ergibt sich daraus eine Zeilen- oder Matrixanordnung von schrägen Flächen, insbesondere kleinen Keilen oder Prismen. Dies kann auch mit Mikrolinsen, insbesondere durch Mikrolinsen mit einer Keilfläche, oder mit einem DOE kombiniert werden. Im letztgenannten Fall ist ein Keil, eine gekippte Fläche oder ein Prisma vorgesehen, das für mindestens eine Zeile von Lichtempfangselementen die optische Achse des Lichtempfängers verkippt. Mehrere solche optische Elemente können einander für den gewünschten Versatz in Zeilen- und/oder Förderrichtung ergänzen.

Die Empfangsoptik weist bevorzugt unterschiedliche Farbfilter für die Zeilen auf. Damit lassen sich Farbaufnahmen realisieren. Vorzugsweise weist hierfür der Lichtempfänger mehr als zwei Zeilen von Lichtempfangspixeln auf. Ein Beispiel ist durch gestaffelt zueinander versetzte rote, grüne und blaue Zeilen insbesondere in Kombination mit mindestens einer weiteren Zeile ohne Farbfilter für eine Grauwertaufnahme gegeben. Die Farbfilter können aber auch innerhalb einer Zeile variieren. Denkbar ist, eine doppelte Anzahl oder zumindest mehr Lichtempfangspixel mit einem grünen Farbfilter zu versehen, um die physiologische Wahrnehmung entsprechend einem Bayer-Pattern zu unterstützen.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine vereinfachte Blockdarstellung einer Kamera;
- Fig. 2: eine dreidimensionale Ansicht einer beispielhaften Anwendung einer Kamera in Montage an einem Förderband;
- Fig. 3a: eine schematische Ansicht von zwei Pixelzeilen, die in Zeilenrichtung zueinander versetzt sind;
- Fig. 3b: eine aus dem Versatz gemäß Figur 3a resultierende effektive Pixelmatrix;
- Fig. 4a: eine schematische Ansicht von zwei Pixelzeilen, die sowohl in Zeilenrichtung als auch senkrecht dazu zueinander versetzt sind;
- Fig. 4b: eine aus dem Versatz gemäß Figur 4a resultierende effektive Pixelmatrix;
- Fig. 5a: eine schematische Darstellung eines Pixels und einer zugeordneten, gegenüber dem Pixelmittelpunkt versetzten Mikrolinse;
- Fig. 5b: eine schematische Ansicht von zwei Pixelzeilen und den relativ dazu durch Mikrolinsen versetzten optischen Achsen;
- Fig. 6: eine schematische Darstellung eines Pixels und eines zugeordneten keilförmigen optischen Elements;
- Fig. 7: eine schematische Darstellung eines Pixels und einer zugeordneten, gegenüber dem Pixelmittelpunkt versetzten Mikrolinse, die mit einem keilförmigen optischen Element kombiniert ist;
- Fig. 8: eine schematische Darstellung eines Pixels und eines zugeordneten optischen Elements in Form einer schrägen Fläche;
- Fig. 9: eine schematische Darstellung eines Pixels und eines zugeordneten optischen Elements mit mindestens einer Freiformfläche; und
- Fig. 10: eine Darstellung gegeneinander versetzter Belichtungszeitfenster für zwei Zeilen von Lichtempfangspixeln.

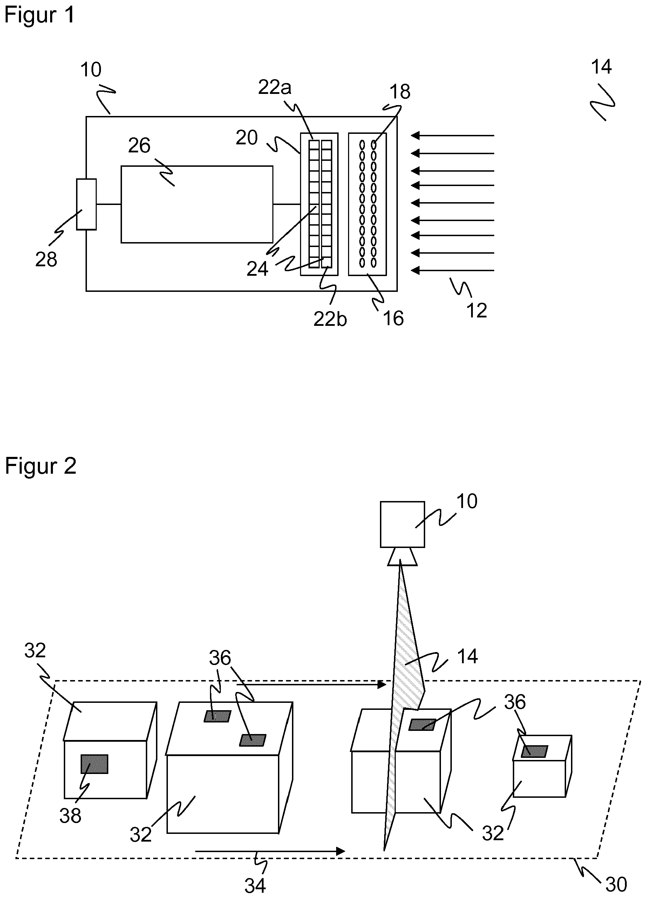

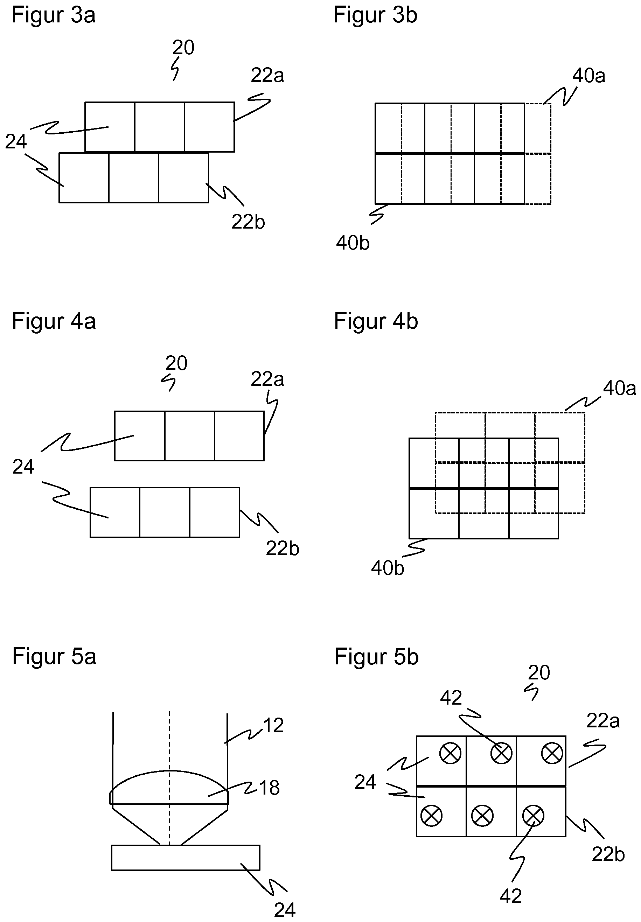

Figur 1 zeigt eine sehr vereinfachte Blockdarstellung einer Kamera 10, die beispielsweise zur Vermessung oder Inspektion von Objekten sowie zum Erfassen von Codes und Auslesen von deren Inhalt eingesetzt werden kann. Die Kamera 10 erfasst Empfangslicht 12 aus einem Erfassungsbereich 14 durch eine Empfangsoptik 16. Die Empfangsoptik 16 ist schematisch durch zwei Zeilen von Mikrolinsen 18 gezeigt. Das ist rein beispielhaft und eher symbolisch zu verstehen. Die möglichen Ausgestaltungen der Empfangsoptik 16 werden weiter unten im Zusammenhang mit den Figuren 5 bis 9 näher erläutert. Außerdem kann die Empfangsoptik 16 durch weitere optische Elemente eines üblichen Kameraobjektivs ergänzt sein.

Ein Lichtempfänger 20 mit mindestens zwei Zeilen 22a-b von lichtempfindlichen Empfangspixeln 24 erzeugt aus dem einfallenden Empfangslicht 12 Bilddaten des Erfassungsbereichs 14 und der dort gegebenenfalls vorhandenen Objekte und Codebereiche. Der Lichtempfänger 20 ist vorzugsweise fest in der Kamera 10 verbaut, also nicht dagegen beweglich. Die Empfangspixel 24 sind vorzugsweise untereinander identisch, damit gleichwertige Bilddaten erzeugt werden. Alternativ sind auch Unterschiede denkbar, beispielsweise unterschiedliche Pixelgrößen und damit höhere Empfindlichkeit in der einen Zeile 22a-b und höhere Ortsauflösung in der anderen Zeile 22b-a. Die beiden Zeilen 22a-b sind vorzugsweise auf demselben Wafer integriert, obwohl auch separate Zeilensensoren nicht ausgeschlossen sein sollen. Denkbar ist weiterhin, eine Matrixanordnung von Empfangspixeln einzusetzen und davon bestimmte Zeilen 22a-b zu selektieren.

Um den Erfassungsbereich 14 auszuleuchten, kann die Kamera 10 eine nicht dargestellte integrierte oder externe Beleuchtungseinrichtung umfassen, die insbesondere ihr Beleuchtungsfeld mit einer Sendeoptik zeilenförmig an den Erfassungsbereich des Lichtempfängers 20 anpasst.

Die Bilddaten des Lichtempfängers 20 werden von einer Steuer- und Auswertungseinheit 26 ausgelesen. Die Auswertungseinheit 26 ist auf einem oder mehreren digitalen Bausteinen implementiert, beispielsweise Mikroprozessoren, ASICs, FPGAs oder dergleichen, die auch ganz oder teilweise außerhalb der Kamera 10 vorgesehen sein können. Ein Teil der Auswertung besteht darin, mehrere Aufnahmen der beiden Zeilen 22a-b miteinander zu verrechnen, um eine höhere Bildauflösung zu gewinnen, wie später im Zusammenhang mit Figur 3 und 4 näher erläutert. Außerdem ist die Auswertungseinheit 26 in der Lage, im Verlauf einer Relativbewegung der Kamera 10 zu aufzunehmenden Objekten erfasste Bildzeilen zu einem Gesamtbild aneinanderzureihen.

Ansonsten können bei der Auswertung die Bilddaten vorbereitend gefiltert, geglättet, helligkeitsnormiert, auf bestimmte Bereiche zugeschnitten oder binarisiert werden. Dann werden beispielsweise interessante Strukturen erkannt und segmentiert, wie einzelne Objekte, Linien oder Codebereiche. Diese Strukturen können vermessen oder auf bestimmte Eigenschaften hin überprüft werden. Sofern Codes gelesen werden sollen, werden diese identifiziert und decodiert, also die in den Codes enthaltene Information ausgelesen.

An einer Schnittstelle 28 der Kamera 10 können Daten ausgegeben werden, und zwar sowohl Auswertungsergebnisse, wie gelesene Codeinformationen oder ermittelte Abmessungen und Inspektionsergebnisse, als auch Daten in verschiedenen Verarbeitungsstufen, wie Rohbilddaten, vorverarbeitete Bilddaten, identifizierte Objekte oder noch nicht decodierte Codebilddaten. Umgekehrt ist möglich, die Kamera 10 über die Schnittstelle 28 zu parametrieren.

Figur 2 zeigt eine mögliche Anwendung der Kamera 10 in Montage an einem Förderband 30, welches Objekte 32, wie durch den Pfeil 34 angedeutet, durch den Erfassungsbereich 14 der Kamera 10 fördert. Die Objekte 32 können an ihren Außenflächen Codebereiche 36 tragen. Aufgabe der Kamera 10 ist, Eigenschaften der Objekte 32 zu erfassen und in einem bevorzugten Einsatz als Codeleser die Codebereiche 36 zu erkennen, die dort angebrachten Codes auszulesen, zu dekodieren und dem jeweils zugehörigen Objekt 32 zuzuordnen. Um auch seitlich angebrachte Codebereiche 38 zu erkennen, werden vorzugsweise zusätzliche, nicht dargestellte Kameras 10 aus unterschiedlicher Perspektive eingesetzt.

Der Erfassungsbereich 16 der Kamera 10 ist entsprechend dem Aufbau des Lichtempfängers 20 und dessen zu Zeilen 22a-b angeordneten Empfangspixeln 24 eine Ebene mit einem zeilenförmigen Lesefeld. Indem die Objekte 32 in der Förderrichtung 34 zeilenweise aufgenommen werden, entsteht nach und nach ein Gesamtbild der vorbeigeförderten Objekte 32 samt der Codebereiche 36.

Figur 3a zeigt in einer schematischen Ansicht einen kleinen Ausschnitt der beiden Zeilen 22a-b, die vorzugsweise nicht drei, sondern einige hundert, tausend oder noch mehr Empfangspixel 24 aufweisen. Die beiden Zeilen 22a-b sind in Zeilenrichtung um einen halben Pixelabstand (pixel pitch) zueinander versetzt angeordnet, wobei alternativ ein anderer Bruchteil vorgesehen sein kann. Es sind auch Ausführungsformen mit mehr als zwei Zeile 22a-b denkbar, insbesondere n Zeilen mit einem Versatz von jeweils 1/n Pixelabstand.

Figur 3b zeigt schematisch eine resultierende Pixelmatrix. Die Aufnahmen 40a-b der beiden Zeilen 22a-b überlagern einander und bilden aufgrund des gegenseitigen Versatzes ein engeres Pixelraster als die ursprünglichen Aufnahmen. Der Versatz wird also für eine Auflösungserhöhung in Zeilenrichtung genutzt. Dazu werden die Aufnahmen 40a-b auf geeignete Weise durch Mittelung oder andere Interpolationsfilter zu der resultierenden Pixelmatrix verrechnet. Das Grundprinzip der Erzeugung eines höher aufgelösten Bildes aus mehreren zueinander versetzten niedriger aufgelösten Ausgangsbildern ist bekannt (Supersampling, Superimposing, Superresolution).

Figur 4a ist eine schematische Ansicht eines Ausschnitts der beiden Zeilen 22a-b ähnlich Figur 3a. Der Unterschied ist, dass die beiden Zeilen 22a-b nicht nur in Zeilenrichtung, sondern auch quer dazu einen Versatz um einen halben Pixelabstand aufweisen. Die Richtung quer zu der Zeilenrichtung wird in Anlehnung an die Anwendung gemäß Figur 2 auch als Förderrichtung bezeichnet. Die beiden Zeilen 22a-b sind demnach um eine halbe freie Zeile voneinander separiert. Erneut sind alternativ andere Bruchteile als ein halber Pixelabstand sowie mehr als zwei Zeilen 22a-b denkbar.

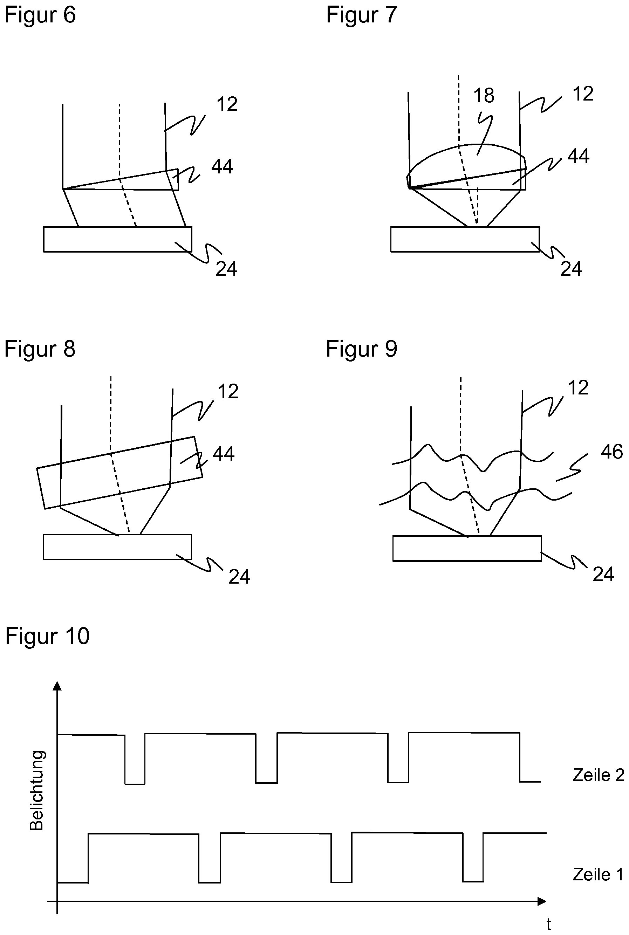

Figur 4b zeigt schematisch eine resultierende Pixelmatrix. Durch den Versatz sowohl parallel wie senkrecht zu der Zeile 22a-b ergibt sich ein engeres effektives Pixelraster in beiden Achsen. Es wird also eine Auflösungserhöhung in Zeilen- wie Förderrichtung beziehungsweise in x-Richtung und in y-Richtung erreicht. Wie später noch anhand der Figur 10 erläutert wird, kann die Auflösung in Förderrichtung auch durch andere Maßnahmen erhöht werden.

Es ist vorstellbar, den in Figur 3a und 4a gezeigten Versatz der beiden Zeilen 22a-b durch eine physische Anordnung der photoempfindlichen Flächen oder Empfangspixel 24 zu realisieren. Dadurch muss jedoch mit einem speziellen Bildsensor als Lichtempfänger 20 gearbeitet werden. Erfindungsgemäß ist es vorteilhaft, die Anordnungen gemäß Figur 3a und 4a als effektive Pixel der Aufnahme in Relation zum Erfassungsbereich 4 zu verstehen. Der Versatz wird dann durch die Empfangsoptik 16 erreicht, welche die Lichtwege so modifiziert, dass effektiv ein Bild entsteht, wie es auch von Empfangspixeln 24 in der dargestellten versetzten physischen Anordnung aufgenommen würde. Es wird demnach eine in Zeilen- und/oder Förderrichtung versetzte Abbildung erzeugt. Dann können die Empfangspixel 24 des Lichtempfängers 20 selbst wie herkömmlich in regelmäßigen Zeilen ohne Versatz angeordnet sein, wobei die Erfindung einen Versatz aber auch nicht ausschließt.

Figur 5a zeigt eine schematische Darstellung eines Empfangspixels 24 und einer zugeordneten, gegenüber einer Mitte des Empfangspixels versetzt angeordneten Mikrolinse 18 als eine Ausführungsform einer solchen Empfangsoptik 16. Der Versatz der Mikrolinsen 18 ist für die beiden Zeilen 22a-b unterschiedlich. Das kann insbesondere dadurch erreicht werden, dass nur einer Zeile 22a-b überhaupt Mikrolinsen 18 zugeordnet sind. Vorteilhaft ist aber, den gewünschten Versatz aufzuteilen und dafür den beiden Zeilen 22a-b Mikrolinsen mit Versatz in Gegenrichtung zuzuordnen.

Figur 5b zeigt beispielhaft die Auswirkung von derart versetzten Mikrolinsen 18. Dabei ist durch den Effekt der jeweiligen Mikrolinse 18 die optische Achse 42 der Empfangspixel 24 gegenüber deren Mitte versetzt angeordnet. In dem dargestellten Beispiel erfolgt in der oberen Zeile 22a ein Versatz um ein Viertel des Pixelabstands nach oben rechts und in der unteren Zeile 22b ein entsprechender Versatz in Gegenrichtung nach unten links. In Summe sind die beiden Zeilen 22a-b auf diese Weise um einen halben Pixelabstand in Zeilen- und Förderrichtung versetzt. Selbstverständlich ist das nur ein Zahlenbeispiel. Der Versatz kann sich auf Zeilen- oder Förderrichtung beschränken, zu weniger oder mehr als einem halben Pixelabstand summieren und praktisch beliebig anders auf die Zeilen 22a-b verteilt werden.

Figur 6 illustriert eine weitere Ausführungsform der Empfangsoptik 16 in einer Darstellung ähnlich Figur 5a. Anstelle einer Mikrolinse 18 ist hier ein optisches Verkippungselement 44 in Form eines Keilelements oder Prismas vorgesehen. Dadurch wird die optische Achse des zugeordneten Empfangspixels 24 praktisch geknickt und somit der Versatz erzeugt. Das optische Verkippungsleement 44 kann wie dargestellt eine Mikrooptik sein. Denkbar ist aber auch ein makroskopisches Verkippungselement für alle Empfangspixel 24 einer Zeile 22a-b oder zumindest einen größeren Teilbereich des Lichtempfängers 20.

Figur 7 illustriert eine Kombination einer Mikrolinse 18 mit einem optischen Verkippungselement 44. Damit kumulieren die zu Figur 5 und 6 erläuterten Effekte. Die Mikrolinse 18 kann einstückig mit dem optischen Verkippungselement 44 ausgebildet sein. Denkbar sind aber auch zwei Schichten aus Mikrolinsen 18 beziehungsweise optischen Verkippungselementen 44 sowie die Kombination von Mikrolinsen 18 mit einem makroskopischen Verkippungselement. Schließlich kann man eine Mikrolinse 18 auch selbst verkippen, ohne ihr eigens ein optisches Verkippungselement 44 zuzuordnen.

Figur 8 zeigt nochmals eine Alternative eines optischen Verkippungselements 44, das hier mit zwei planen Flächen ausgebildet, jedoch insgesamt in einem Winkel zu der Oberfläche des Empfangspixels 24 angeordnet ist. Damit sind alle Varianten wie bei einem als Keil oder Prisma ausgebildeten optischen Verkippungselement 44 möglich.

Figur 9 zeigt eine weitere Ausführungsform der Empfangsoptik 16, die nun im Unterschied zu den bisherigen Ausführungsformen als optisches Element mit mindestens einer Freiformfläche 46 ausgebildet ist. Solche Freiformflächen erlauben noch mehr Freiheitsgrade für das Optikdesign als beispielsweise sphärische oder asphärische Mikrolinsen 18. Alternativ zu solchen spezifischen Mikrooptiken mit Freiformfläche 46 ist es insbesondere einfacher möglich, mit nur einem makroskopischen optischen Element mit Freiformfläche 46 den gewünschten Versatz für eine Vielzahl oder sogar alle Empfangspixel einer Zeile 22a-b zu erzeugen.

Weitere nicht dargestellte Alternativen für die Empfangsoptik 16 sind mit diffraktiven optischen Elementen (DOEs) möglich. Damit lassen sich die bisher beschriebenen pixelbezogenen Lichtumverteilungen ebenfalls erreichen. Die zu den Figuren 5 bis 9 erläuterten Ausführungsformen sind auch nicht beschränkend zu verstehen. Zu den schon genannten Kombinationen können diese Maßnahmen praktisch beliebig einander ergänzend eingesetzt werden, und über solche refraktiven Kombinationen hinaus ist jeweils auch die zusätzliche Verwendung eines DOEs denkbar.

Zumindest einige der erläuterten Empfangsoptiken 16 sorgen bereits für einen Versatz auch in Förderrichtung. Hier gibt es aber auch noch andere Möglichkeiten, die alternativ oder ergänzend verwendet werden können. Das ist zum einen eine Anpassung der Aufnahmefrequenz, sofern der Nachteil der verkürzten Integrationszeiten in Kauf genommen werden kann.

Figur 10 zeigt gegeneinander versetzte Belichtungszeitfenster für die beiden Zeilen 22a-b von Empfangspixeln 24. Dabei bezeichnet Belichtungszeitfenster das Zeitintervall, in dem die Empfangspixel 24 das Empfangslicht 12 integrieren. Die Darstellung ist rein schematisch zu verstehen, keineswegs muss ein Belichtungszeitfenster die Dauer zwischen zwei Aufnahmen praktisch vollständig ausfüllen wie dargestellt. Vielmehr wird die Dauer wie üblich entsprechend der gewünschten Aussteuerung und ähnlicher Faktoren gewählt.

Das Besondere ist vielmehr, dass die Belichtungszeitfenster der beiden Zeilen 22a-b synchron, jedoch phasenverschoben sind. Insbesondere entspricht die Verzögerung der Belichtungszeitfenster der zweiten Zeile 22b gegenüber den Belichtungszeitfenstern der ersten Zeile 22a gerade einem halben Pixelabstand oder allgemeiner dem Versatz, der auch in Zeilenrichtung zum Tragen kommt. Dabei ist die Anpassung an die Fördergeschwindigkeit keine neue Aufgabenstellung, da die Aufnahmefrequenz für eine gleichmäßige Auflösung in Zeilen- und Förderrichtung auch schon herkömmlich, ohne Auflösungserhöhung durch versetzte Pixel, entsprechend gewählt werden sollte.

Die durch diese Aufnahmefrequenz vorgegebenen Belichtungszeitfenster müssen also lediglich für eine der beiden Zeilen 22a-b um 50 % oder einen anderen Bruchteil zeitversetzt werden.

Durch angepasste Belichtungszeitfenster ergeben sich weitere Kombinationsmöglichkeiten. So ist denkbar, die Auflösungserhöhung in Zeilenrichtung durch die Empfangsoptik 16, insbesondere durch Mikrolinsen 18 zu erreichen, während in Förderrichtung eine höhere Aufnahmefrequenz oder gestaffelte Belichtungszeitfenster zum Einsatz kommen. Das kann die Anforderungen an den Lichtempfänger 20 und die Empfangsoptik 16 absenken und auf diesem Weg möglicherweise zu einer praktikableren Lösung führen.

## Patentansprüche

1. Kamera (10) zur Erfassung von relativ zu der Kamera (10) in einer Förderrichtung (34) bewegten Objekten (32), die einen Lichtempfänger (20) mit einer Vielzahl von Lichtempfangspixeln (24), die in zumindest zwei Zeilen (22a-b) in einer Zeilenrichtung quer zu der Förderrichtung (34) angeordnet sind sowie eine Steuer- und Auswertungseinheit (26) aufweist, die dafür ausgebildet ist, mit den beiden Zeilen (22a-b) eine erste Aufnahme (40a) und eine zweite Aufnahme (40b) eines Teilbereich des Objekts (32) zu erzeugen, wobei die Aufnahmen (40a-b) zueinander zumindest in Zeilenrichtung einen Versatz aufweisen, aus der ersten Aufnahme (40a) und der zweiten Aufnahme (40b) eine Bildzeile mit einer höheren Auflösung als die ursprüngliche Auflösung des Lichtempfängers (20) zu berechnen und aus im Laufe der Bewegung der Objekte (32) erzeugten Bildzeilen ein Gesamtbild zusammenzusetzen,
**dadurch gekennzeichnet,**
**dass** dem Lichtempfänger (20) eine Empfangsoptik (16) vorgeordnet ist, die für den Versatz zwischen den Aufnahmen (40a-b) sorgt.

2. Kamera (10) nach Anspruch 1,
wobei die Lichtempfangspixel (24) in einem Pixelabstand zueinander angeordnet sind, und wobei der Versatz der Aufnahmen (40a-b) einem Bruchteil des Pixelabstands entspricht.

3. Kamera (10) nach Anspruch 1 oder 2,
wobei die Auswertungseinheit (26) dafür ausgebildet ist, die erste Aufnahme (40a) und die zweite Aufnahme (40b) mit einem Versatz auch quer zu der Zeilenrichtung zu erzeugen und ein Gesamtbild mit höherer Auflösung als die ursprüngliche Auflösung auch in Förderrichtung (34) zu erzeugen.

4. Kamera (10) nach Anspruch 3,
wobei die Empfangsoptik (16) auch für den Versatz in Förderrichtung (34) sorgt.

5. Kamera (10) nach Anspruch 3 oder 4,
wobei die Auswertungseinheit (26) dafür ausgebildet ist, die erste Aufnahme (40a) und die zweite Aufnahme (40b) mit gestaffelten Belichtungszeitfenstern zu erzeugen.

6. Kamera (10) nach einem der vorhergehenden Ansprüche,
wobei die Empfangsoptik (16) eine Vielzahl von in Zeilenrichtung verkippten und/oder gegenüber einem Raster der Lichtempfangspixel (24) versetzten Mikrolinsen (18) aufweist.

7. Kamera (10) nach einem der vorhergehenden Ansprüche,
wobei die Empfangsoptik (16) eine Vielzahl von in Förderrichtung verkippten und/oder gegenüber einem Raster der Lichtempfangspixel (24) versetzten Mikrolinsen (18) aufweist.

8. Kamera (10) nach Anspruch 6 oder 7,
wobei Mikrolinsen (18) für die eine Zeile (22a-b) in Gegenrichtung der Mikrolinsen (18) für die andere Zeile (22a-b) verkippt oder versetzt sind.

9. Kamera (10) nach einem der vorhergehenden Ansprüche,
wobei die Empfangsoptik (16) ein diffraktives optisches Element aufweist.

10. Kamera (10) nach einem der vorhergehenden Ansprüche,
wobei die Empfangsoptik (16) mindestens eine Freiformfläche (46) aufweist.

11. Kamera nach einem der vorhergehenden Ansprüche,
wobei die Empfangsoptik mindestens eine gekippte oder keilförmige Fläche (44) aufweist.

12. Kamera (10) nach einem der vorhergehenden Ansprüche,
wobei die Empfangsoptik (16) unterschiedliche Farbfilter für die Zeilen (22a-b) aufweist.

13. Verfahren zur Erfassung von relativ zu der Kamera (10) in einer Förderrichtung (34) bewegten Objekten (32) mit einem Lichtempfänger (16), der eine Vielzahl von in zumindest zwei Zeilen (22a-b) in einer Zeilenrichtung quer zu der Förderrichtung (34) angeordneten Lichtempfangspixeln (24) aufweist, wobei mit den beiden Zeilen (22a-b) eine erste Aufnahme (40a) und eine zweite Aufnahme (40b) eines Teilbereich des Objekts (32) erzeugt wird, wobei die Aufnahmen (40a-b) zueinander zumindest in Zeilenrichtung einen Versatz aufweisen, aus der ersten Aufnahme (40a) und der zweiten Aufnahme (40b) eine Bildzeile mit einer höheren Auflösung als die ursprüngliche Auflösung des Lichtempfängers (20) berechnet wird und aus im Laufe der Bewegung der Objekte (32) erzeugten Bildzeilen ein Gesamtbild zusammengesetzt wird,
**dadurch gekennzeichnet,**
**dass** der Versatz durch eine dem Lichtempfänger (20) vorgeordnete Empfangsoptik (16) erzeugt wird.

## Claims

1. A camera (10) for detecting objects (32) moving relative to the camera (10) in a conveying direction (34), the camera (10) comprising a light receiver (20) having a plurality of light receiving pixels (24) arranged in at least two lines (22a-b) in a line direction transverse to the conveying direction (34) and a control and evaluation unit (26) configured to generate a first image (40a) and a second image (40b) of a partial region of the object (32) by means of the two lines (22a-b), the images (40a-b) having a mutual offset at least in the line direction, to compute an image line of higher resolution than an original resolution of the light receiver (20) from the first image (40a) and the second image (40b), and to compose an overall image from the image lines generated in the course of the movement of the objects (32),
**characterized in that** reception optics (16) are arranged in front of the light receiver (20) for providing the mutual offset between the images (40a-b).

2. The camera (10) according to claim 1,
wherein the light receiving pixels (24) are arranged in a mutual pixel distance, and wherein the offset of the images (40a-b) corresponds to a fraction of the pixel distance.

3. The camera (10) according to claim 1 or 2,
wherein the control and evaluation unit (26) is configured to generate the first image (40a) and the second image (40b) with an offset also transverse to the line direction, and to generate an overall image of higher resolution than the original resolution also in the conveying direction (34).

4. The camera (10) according to claim 3,
wherein the reception optics (16) also provide the offset in the conveying direction (34).

5. The camera (10) according to claim 3 or 4,
wherein the control and evaluation unit (26) is configured to generate the first image (40a) and the second image (40b) with staggered exposure time windows.

6. The camera (10) according to any of the preceding claims,
wherein the reception optics (16) comprise a plurality of microlenses (18) which are, in the line direction, tilted and/or offset relative to a grid of the light receiving pixels (24).

7. The camera (10) according to any of the preceding claims,
wherein the reception optics (16) comprise a plurality of microlenses (18) which are, in the conveying direction (34), at least one of tilted or offset relative to a grid of the light receiving pixels (24).

8. The camera (10) according to claim 6 or 7,
wherein the microlenses (18) for the one line (22a-b) are tilted or offset in a direction opposite to the microlenses (18) for the other line (22b-a).

9. The camera (10) according to any of the preceding claims,
wherein the reception optics (16) comprise a diffractive optical element.

10. The camera (10) according to any of the preceding claims,
wherein the reception optics (16) comprise at least one free-form surface (46).

11. The camera (10) according to any of the preceding claims,
wherein the reception optics (16) comprise at least one tilted or wedge-shaped surface (44).

12. The camera (10) according to any of the preceding claims,
wherein the reception optics (16) have different color filters for the lines (22a-b).

13. A method for detecting objects (32) moving relative to a camera (10) in a conveying direction (34) by a light receiver (20) comprising a plurality of light receiving pixels (24) arranged in at least two lines (22a-b) in a line direction transverse to the conveying direction (34), wherein a first image (40a) and a second image (40b) of a partial region of the object (32) are generated by means of the two lines (22a-b), the images (40a-b) having a mutual offset at least in the line direction, an image line having a higher resolution than an original resolution of the light receiver (20) is computed from the first image (40a) and the second image (40b) and an overall image is composed from the image lines generated in the course of the movement of the objects (32), **characterized in that** the mutual offset between the first image (40a) and the second image (40b) is provided by reception optics (16) arranged in front of the light receiver (20).

## Revendications

1. Caméra (10) pour détecter des objets (32) déplacés par rapport à la caméra (10) dans une direction de convoyage (34), qui comprend un récepteur de lumière (20) présentant une multitude de pixels de réception de lumière (24) qui sont disposés en au moins deux lignes (22a - b) dans une direction de ligne transversalement à la direction de convoyage (34), ainsi qu'une unité de commande et d'évaluation (26) qui est réalisée pour générer une première prise de vue (40a) et une seconde prise de vue (40b) d'une zone partielle de l'objet (32) avec les deux lignes (22a - b), lesdites prises de vue (40a - b) présentant un décalage mutuel au moins en direction de ligne, pour calculer, à partir de la première prise de vue (40a) et de la seconde prise de vue (40b), une ligne d'image avec une résolution supérieure à la résolution initiale du récepteur de lumière (20), et pour composer une image d'ensemble à partir des lignes d'image générées au cours du déplacement des objets (32),
**caractérisée en ce que**
une optique de réception (16) est agencée en amont du récepteur de lumière (20), qui assure le décalage entre les prises de vue (40a - b).

2. Caméra (10) selon la revendication 1,
dans laquelle les pixels de réception de lumière (24) sont disposés à une distance inter-pixel les uns des autres, et le décalage des prises de vue (40a - b) correspond à une fraction de la distance inter-pixel.

3. Caméra (10) selon la revendication 1 ou 2,
dans laquelle l'unité d'évaluation (26) est réalisée pour générer la première prise de vue (40a) et la seconde prise de vue (40b) avec un décalage également transversalement à la direction de ligne et pour générer une image d'ensemble ayant une résolution supérieure à la résolution initiale également en direction de convoyage (34).

4. Caméra (10) selon la revendication 3,
dans laquelle l'optique de réception (16) assure également le décalage en direction de convoyage (34).

5. Caméra (10) selon la revendication 3 ou 4,
dans laquelle l'unité d'évaluation (26) est réalisée pour générer la première prise de vue (40a) et la seconde prise de vue (40b) avec des fenêtres temporelles d'exposition échelonnées.

6. Caméra (10) selon l'une des revendications précédentes,
dans laquelle l'optique de réception (16) comprend une multitudes de microlentilles (18) basculées en direction de ligne et/ou décalées par rapport à une trame des pixels de réception de lumière (24).

7. Caméra (10) selon l'une des revendications précédentes,
dans laquelle l'optique de réception (16) comprend une multitudes de microlentilles (18) basculées en direction de convoyage et/ou décalées par rapport à une trame des pixels de réception de lumière (24).

8. Caméra (10) selon la revendication 6 ou 7,
dans laquelle les microlentilles (18) pour l'une des lignes (22a - b) son basculées ou décalées en direction opposée aux microlentilles (18) pour l'autre ligne (22a - b).

9. Caméra (10) selon l'une des revendications précédentes,
dans laquelle l'optique de réception (16) comprend un élément optique diffractif.

10. Caméra (10) selon l'une des revendications précédentes,
dans laquelle l'optique de réception (16) comprend au moins une surface de forme libre (46).

11. Caméra (10) selon l'une des revendications précédentes,
dans laquelle l'optique de réception comprend au moins une surface basculée ou en forme de coin (44).

12. Caméra (10) selon l'une des revendications précédentes,
dans laquelle l'optique de réception (16) comprend différents filtres de couleur pour les lignes (22a - b).

13. Procédé pour détecter des objets (32) déplacés par rapport à la caméra (10) dans une direction de convoyage (34), qui comprend un récepteur de lumière (16) présentant une multitude de pixels de réception de lumière (24) qui sont disposés en au moins deux lignes (22a - b) dans une direction de ligne transversalement à la direction de convoyage (34), dans lequel une première prise de vue (40a) et une seconde prise de vue (40b) d'une zone partielle de l'objet (32) sont générées avec les deux lignes (22a - b), lesdites prises de vue (40a - b) présentent un décalage mutuel au moins en direction de ligne, à partir de la première prise de vue (40a) et de la seconde prise de vue (40b), une ligne d'image est calculée, ayant une résolution supérieure à la résolution initiale du récepteur de lumière (20), et une image d'ensemble est composée à partir des lignes d'image générées au cours du déplacement des objets (32),
**caractérisé en ce que**
le décalage est généré par une optique de réception (16) agencée en amont du récepteur de lumière (20).
